# EUROPEAN PATENT APPLICATION

(11) **EP 4 382 484 A1**
(43) Date of publication of application: **12.06.2024**
(21) Application number: 22852671.1
(22) Date of filing: 09.06.2022
(51) Int. Cl.: C01G 39/00, C01G 39/02

(54) **MOLYBDIC ACID SOLUTION AND METHOD FOR PRODUCING SAME, MOLYBDENUM OXIDE POWDER AND METHOD FOR PRODUCING SAME**

(30) Priority: 04.08.2021 JP 2021128391
(71) Applicant: Mitsui Mining & Smelting Co., Ltd, Shinagawa-ku Tokyo 141-8584 (JP)
(72) Inventor: MOTONO, Ryuji, Omuta-shi, Fukuoka 836-0003 (JP); HARA, Syuhei, Omuta-shi, Fukuoka 836-0003 (JP); KUMA, Taihei, Omuta-shi, Fukuoka 836-0003 (JP)
(74) Representative: Novagraaf Technologies
(86) International application number: PCT/JP2022/023318
(87) International publication number: WO 2023/013244

(57) **Abstract**

A molybdic acid solution of the present invention is a molybdic acid solution containing 0.1 to 40.0 mass% of molybdenum in terms of MoOs, and has a particle size (D50) of 20 nm or less as measured by particle size distribution measurement using a dynamic light scattering method. A production method of a molybdic acid solution of the present invention includes a step of adding an acidic molybdenum aqueous solution containing 1 to 100 g/L of molybdenum in terms of MoO3 to a 10 to 30 mass% ammonia aqueous solution to generate a molybdenum-containing precipitate, and a step of adding an organic nitrogen compound to a molybdenum-containing precipitation slurry in which the molybdenum-containing precipitate is formed into a slurry state to generate a molybdic acid solution.

## Description

### Technical Field

The present invention relates to a molybdic acid solution, a method for producing the same, and a molybdenum oxide powder and a method for producing the same.

### Background Art

Molybdenum oxide, for example, molybdenum trioxide is expected to be applied to fields of electrochemical devices and displays in addition to applications such as production of catalysts, pigments, and ceramics and glass. For example, in a case where the molybdenum trioxide is used as a catalyst, it is often used by coating the surface of a substrate or a carrier, and it has been studied that if the molybdenum trioxide can be converted into a solution, coating becomes easy, and it becomes easy to form a composite with a plurality of elements and to add characteristics suitable for applications. A technique for dissolving molybdenum trioxide is disclosed in, for example, Patent Literature 1.

### Citation List

### Patent Literature

Patent Literature 1:
Patent Literature 1: JP 2-289428 A

### Summary of Invention

### Technical Problem

However, since the molybdic acid solution disclosed in Patent Literature 1 becomes a viscous sol state as the MoOs concentration increases, there is a problem that not only a mixing property with other raw materials (an alkali metal element and the like) decreases but also a long-term stability of the solution decreases.

In view of the above problems, an object of the present invention is to provide a molybdic acid solution having a high concentration and excellent solution stability and a method for producing the same, as well as a molybdenum oxide powder and a method for producing the same.

### Solution to Problem

The molybdic acid solution of the present invention made to solve the above problems is a molybdic acid solution containing 0.1 to 40 mass% of molybdenum in terms of MoOs, and has a particle size (D50) of 20 nm or less as measured by particle size distribution measurement using a dynamic light scattering method.

The molybdic acid solution of the present invention preferably contains 0.1 to 40 mass% of molybdenum in terms of MoOs from a viewpoint of improving solution stability of the solution. The molybdic acid solution of the present invention more preferably contains 20 to 40 mass% of molybdenum in terms of MoOs.

Here, a molybdic acid concentration in the molybdic acid solution is calculated by appropriately diluting the solution with dilute hydrochloric acid as necessary, and measuring the Mo weight fraction in terms of molybdenum oxide (MoOs) by ICP emission spectrometry (AG-5110 manufactured by Agilent Technologies). The molybdic acid in the molybdic acid solution of the present invention does not necessarily exist in the state of MoOs. The content of molybdic acid is indicated in terms of MoOs based on a practice of indicating the molybdic acid concentration.

Here, it is presumed that the molybdic acid in the molybdic acid solution of the present invention is present in the solution as a polymolybdic acid polynuclear complex ion in which molybdenum atoms and oxygen atoms are condensed in multiple stages in the solution.

The particle size (D50) measured by particle size distribution measurement using the dynamic light scattering method is preferably 20 nm or less from a viewpoint of temporal stability, more preferably 10 nm or less, still more preferably 2 nm or less, particularly preferably 1 nm or less, and particularly more preferably less than a detection limit of less than 1 nm. As described above, regarding the particle size (D50) of the present invention, a solution having a particle size (D50) of 20 nm or less as measured by particle size distribution measurement using the dynamic light scattering method is referred to as a "molybdic acid solution" of the present invention. For example, the particle size (D50) of the molybdic acid particles or the like in the molybdic acid solution of the present invention as measured by the particle size distribution measurement using the dynamic light scattering method is preferably 20 nm or less from the viewpoint of temporal stability, more preferably 10 nm or less, still more preferably 2 nm or less, particularly preferably 1 nm or less, and still more preferably less than the detection limit of less than 1 nm.

Here, the dynamic light scattering method is a method in which light scattering intensity from a group of particles moving in a Brownian motion is measured by irradiating a solution such as a suspension solution with light such as laser light, and a particle diameter and a distribution are obtained from temporal variation of the intensity. Specifically, the method for evaluating the particle size distribution is performed in accordance with JIS Z 8828:2019 "Particle size analysis-dynamic light scattering method" using a zeta potential/particle size/molecular weight measurement system (ELSZ-2000ZS manufactured by Otsuka Electronics Co., Ltd.). In order to remove dust or the like in the solution to be measured immediately before measurement, the solution is filtered with a filter having a pore size of 2 µm, and subjected to ultrasonic treatment for 3 minutes with an ultrasonic cleaner (VS-100III manufactured by AS ONE Corporation). Further, a liquid temperature of the solution as a measurement mode was adjusted to 25°C. The particle size (D50) refers to a median diameter (D50) that is a particle size indicating a 50% integrated value of an integrated distribution curve.

The "solution" in the present invention is not limited to a solution in which a solute is dispersed or mixed in a state of a single molecule in a solvent, and also includes an assembly in which a plurality of molecules is attracted by intermolecular interaction, for example, (1) a multimer molecule, (2) a solvated molecule, (3) a molecular cluster, and (4) colloidal particles are dispersed in a solvent.

In the molybdic acid solution of the present invention, the molybdic acid solution is preferably an aqueous solution.

The molybdic acid in the molybdic acid solution of the present invention has high dispersibility in water and good solubility in water, and therefore, pure water can be used as a solvent.

The molybdic acid solution of the present invention contains ammonia and an organic nitrogen compound.

The molybdic acid solution of the present invention contains ammonia and an organic nitrogen compound in addition to the molybdic acid. The "ammonia" and the "organic nitrogen compound" according to the present invention include those ionized in the molybdic acid solution of the present invention. As will be described in detail in the production method of a molybdic acid solution of the present invention to be described later, in the production step, a hydrous ammonium molybdate cake, which is a molybdenum-containing precipitation slurry, is generated by a reverse neutralization method in which an acidic molybdenum solution is added to ammonia water, and then an organic nitrogen compound is added and mixed to generate the molybdic acid solution of the present invention, and thus it is considered that substituted ammonia and the organic nitrogen compound are present in the solution as cations.

Examples of the method for measuring the concentration of ammonia present in the solution include a method in which sodium hydroxide is added to the solution, ammonia is distilled and separated, and the concentration of ammonia is quantified by an ion meter, a method in which N₂ content in a gasified sample are quantified by a thermal conductivity meter, a Kjeldahl method, gas chromatography (GC), ion chromatography, gas chromatography/mass spectrometry (GC-MS), and the like.

On the other hand, examples of the organic nitrogen compound include an aliphatic amine, an aromatic amine, an amino alcohol, an amino acid, a polyamine, a quaternary ammonium, a guanidine compound, and an azole compound.

Examples of the aliphatic amine include methylamine, dimethylamine, trimethylamine, ethylamine, methylethylamine, diethylamine, triethylamine, methyldiethylamine, dimethylethylamine, n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine and tert-butylamine, n-pentamine, n-hexylamine, cyclohexylamine, and piperidine.

Examples of the aromatic amine include aniline, phenylenediamine, and diaminotoluene. Furthermore, examples of the amino alcohol include methanolamine, ethanolamine, propanolamine, butanolamine, pentanolamine, dimethanolamine, diethanolamine, trimethanolamine, methylmethanolamine, methylethanolamine, methylpropanolamine, methylbutanolamine, ethylmethanolamine, ethylethanolamine, ethylpropanolamine, dimethylmethanolamine, dimethylethanolamine, dimethylpropanolamine, methyldimethanolamine, methyldiethanolamine, diethylmethanolamine, trishydroxymethylam inomethane, bis(2-hydroxyethyl)aminotris(hydroxymethyl)methane, aminophenol, and the like. Examples of the amino acid include alanine, arginine, aspartic acid, and EDTA. Further, examples of the polyamine include polyamine and polyether amine.

Examples of the quaternary ammonium include alkylimidazolium, pyridinium, pyrrolidium, and tetraalkylammonium. Here, specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Specific examples of pyridinium and pyrrolidium include N-butyl-pyridinium, N-ethyl-3-methyl-pyridinium, N-butyl-3-methyl-pyridinium, N-hexyl-4- (dimethylamino)-pyridinium, N-methyl-1-methylpyrrolidinium, and N-butyl-1-methylpyrrolidinium. Further, specific examples of tetraalkylammonium include tetramethylammonium, tetraethylammonium, tetrabutylammonium, and ethyl-dimethyl-propylammonium. Examples of the anion that forms a salt with the above cation include OH⁻, Cl⁻, Br⁻, I⁻, BF₄⁻, and HSO₄⁻.

Examples of the guanidine compound include guanidine, diphenylguanidine, and ditolylguanidine. Examples of the azole compound include imidazole compounds and triazole compounds. Here, specific examples of the imidazole compound include imidazole, 2-methylimidazole, and 2-ethyl-4-methylimidazole. Specific examples of the triazole compound include 1,2,4-triazole, methyl 1,2,4-triazole-3-carboxylate, and 1,2,3-benzotriazole.

Examples of the method for measuring the concentration of the organic nitrogen compound present in the solution include gas chromatography (GC), liquid chromatography (LC), mass spectrometry (MS), gas chromatography and mass spectrometry (GC-MS), liquid chromatography and mass spectrometry (LC-MS), and the like, and a method of quantifying the N₂ content in the gasified sample with a thermal conductivity meter may be used in combination.

In the molybdic acid solution of the present invention, the organic nitrogen compound is preferably an aliphatic amine or quaternary ammonium.

This is because when the organic nitrogen compound is an aliphatic amine or a quaternary ammonium, these organic nitrogen compounds have high volatility and are easily removed when combined with a plurality of elements in order to add characteristics suitable for the application.

Here, when the organic nitrogen compound is an aliphatic amine, the organic nitrogen compound is particularly low in toxicity, which is preferable. Specifically, an aliphatic amine having 1 to 4 carbon atoms is more preferable, and an aliphatic amine having 1 to 2 carbon atoms is particularly preferable. Examples thereof include methylamine and dimethylamine.

When the organic nitrogen compound is quaternary ammonium, it is preferable from a viewpoint of having not only high solubility but also high crystallization suppression and high solation suppression. For example, a tetraalkylammonium salt is preferable, a tetraalkylammonium hydroxide salt is more preferable, tetramethylammonium hydroxide and tetraethylammonium are still more preferable, and tetramethylammonium hydroxide (TMAH) is also particularly preferable.

Furthermore, the organic nitrogen compound is not one selected from an aliphatic amine, an aromatic amine, an amino alcohol, an amino acid, a polyamine, a quaternary ammonium, a guanidine compound, and an azole compound, but may be a mixture of two or more thereof. For example, a mixture of two compounds, aliphatic amines and quaternary ammonium, is preferable from a viewpoint that the solubility can be increased while suppressing an addition amount so as not to increase the toxicity.

Specific examples thereof include a mixture of two organic nitrogen compounds such as methylamine and tetramethylammonium hydroxide (TMAH), dimethylamine and tetramethylammonium hydroxide (TMAH), methylamine and dimethylamine, and a mixture of three organic nitrogen compounds such as methylamine, dimethylamine and tetramethylammonium hydroxide (TMAH).

In the molybdic acid solution of the present invention, the aliphatic amine is more preferably methylamine or dimethylamine, and the quaternary ammonium is more preferably tetramethylammonium hydroxide (TMAH).

When the aliphatic amine is methylamine or dimethylamine, the toxicity is low as described above, which is preferable. When the quaternary ammonium is tetramethylammonium hydroxide (TMAH), not only high solubility is obtained as described above, but also high crystallization suppression and high solation suppression are obtained, which is preferable. Furthermore, methylamine is particularly preferable in terms of having the highest volatility and a low toxicity.

The molybdic acid solution of the present invention preferably has a pH of 6 or more and 12 or less.

This is because when the molybdic acid solution of the present invention has a pH of 6 or more and 12 or less, the solution is more excellent in the solution stability. In addition, the pH is more preferably 7 or more and 12 or less, still more preferably more than 7 and 12 or less, particularly preferably more than 7 and 11 or less, and particularly more preferably 9 or more and 10 or less. In the molybdic acid solution of the present invention, as basicity of the organic nitrogen compound contained in the solution increases, the organic nitrogen compound tends to strongly bind to the polymolybdic acid polynuclear complex ions, and H⁺ in the polymolybdic acid polynuclear complex ions is liberated, so that it is presumed that the pH tends to decrease.

The molybdic acid solution of the present invention may contain oxide powder of Nb, Ta, Ti, Si, Zr, Zn, Al, Y, V, lantanoid (La, Ce, Nd, Eu, Gd, Dy, Yb), or the like as an additive. This is because since the molybdic acid solution of the present invention is a uniform solution, improvement in uniformity and improvement in reactivity (reaction rate) are expected even when these oxide powders are in a suspended state. When these oxide powders are dissolved in the molybdic acid solution of the present invention to form a uniform solution, complexing elements can have the most favorable reactivity.

Furthermore, the molybdic acid solution of the present invention may contain components other than a component derived from molybdenum or molybdic acid and components derived from ammonia and an organic nitrogen compound (referred to as "other components") as long as the action and effect thereof are not inhibited. Examples of other components include Nb, Ta, Ti, Si, Zr, Zn, Al, Y, V, and lanthanoid (La, Ce, Nd, Eu, Gd, Dy, Yb), or the like. However, the present invention is not limited thereto. The content of other components in the molybdic acid solution of the present invention is preferably less than 5 mass%, more preferably less than 4 mass%, and still more preferably less than 3 mass%. Incidentally, the molybdic acid solution of the present invention is assumed to unintentionally contain inevitable impurities. The content of the inevitable impurities is preferably less than 0.01 mass%.

The molybdenum oxide powder of the present invention contains molybdic acid particles contained in a molybdic acid solution.

The molybdenum oxide powder of the present invention contains molybdic acid particles contained in the molybdic acid solution described above. The method for producing the molybdenum oxide powder of the present invention will be described later.

The production method of the molybdic acid solution of the present invention described above will be described below.

A production method of a molybdic acid solution of the present invention, including: a step of adding an acidic molybdenum aqueous solution containing molybdenum in an amount of 1 to 100 g/L in terms of MoOs to a 10 to 30 mass% ammonia aqueous solution to generate a molybdenum-containing precipitate; and a step of adding an organic nitrogen compound to a molybdenum-containing precipitation slurry obtained by making the molybdenum-containing precipitate into a slurry to generate a molybdic acid solution.

First, in the step of adding an acidic molybdenum aqueous solution containing 1 to 100 g/L of molybdenum in terms of MoOs to a 10 to 30 mass% ammonia aqueous solution to generate a molybdenum-containing precipitate, the acidic molybdenum aqueous solution refers to a molybdenum sulfate aqueous solution obtained by solvent extraction of a solution in which molybdenum is dissolved in an acidic aqueous solution containing sulfuric acid. The molybdenum referred to in the present description includes molybdenum oxide unless otherwise specified.

Here, the molybdenum sulfate aqueous solution is preferably adjusted to contain 1 to 100 g/L of molybdenum in terms of MoOs by adding water (for example, pure water). At this time, when a molybdenum concentration is 1 g/L or more in terms of MoOs, it is preferable because the molybdic acid compound hydrate easily soluble in water is generated, and in consideration of productivity, the molybdenum concentration is more preferably 10 g/L or more, and still more preferably 20 g/L or more.

On the other hand, when the molybdenum concentration is 100 g/L or less in terms of MoOs, it is preferable because the molybdic acid compound hydrate easily soluble in water is generated, and in order to synthesize the molybdic acid compound hydrate more reliably soluble in water, the molybdenum concentration is more preferably 90 g/L or less, still more preferably 80 g/L or less, and particularly preferably 70 g/L or less. The pH of the molybdenum sulfate aqueous solution is preferably 2 or less, and more preferably 1 or less, from a viewpoint of completely dissolving molybdenum or molybdenum oxide.

When the molybdenum sulfate aqueous solution is added to the aqueous ammonia solution, it is preferable to add the molybdenum sulfate aqueous solution to 10 mass% to 30 mass% of the aqueous ammonia solution by a so-called reverse neutralization method, that is, to obtain a molybdic acid compound hydrate slurry, a so-called molybdenum-containing precipitate slurry by the reverse neutralization method.

The ammonia aqueous solution used for the reverse neutralization preferably has an ammonia concentration of 10 mass% to 30 mass%. When the ammonia concentration is 10 mass%, molybdenum hardly remains undissolved, and molybdenum to molybdenum oxide can be completely dissolved in water. On the other hand, it is preferable that the ammonia concentration is 30 mass% or less because it is in the vicinity of a saturated aqueous solution of ammonia.

From such a viewpoint, the ammonia concentration of the aqueous ammonia solution is preferably 10 mass% or more, more preferably 15 mass% or more, still more preferably 20 mass% or more, and particularly preferably 25 mass%. On the other hand, the ammonia concentration is preferably 30 mass% or less, more preferably 29 mass% or less, and still more preferably 28 mass% or less.

During the reverse neutralization, a molar ratio of NH₃/M_{O}O₃ is preferably 0.1 or more and 300 or less, and more preferably 5 or more and 200 or less for the amount of the molybdenum sulfate aqueous solution added to the ammonia water. In addition, for the molybdenum sulfate aqueous solution added to the ammonia water, the molar ratio of NH₃/SO₄²⁻ is preferably 3.0 or more, more preferably 10.0 or more, and still more preferably 20.0 or more from a viewpoint of generating an amine and a molybdic acid compound soluble in a thin ammonia water. On the other hand, from a viewpoint of cost reduction, the molar ratio of NH₃/SO₄²⁻ is preferably 200 or less, more preferably 150 or less, and still more preferably 100 or less.

In the reverse neutralization, the time required for adding the molybdenum sulfate aqueous solution to the ammonia water is preferably 1 minute or less, more preferably 30 seconds or less, and still more preferably 10 seconds or less. In other words, it is preferable that the molybdenum sulfate aqueous solution is not gradually added over time, but the molybdenum sulfate aqueous solution is charged into ammonia water in as short a time as possible, for example, charged at once, and subjected to a neutralization reaction. In the reverse neutralization, since an acidic molybdenum sulfate aqueous solution is added to alkaline ammonia water, the neutralization reaction can be performed while maintaining a high pH. The molybdenum sulfate aqueous solution and the ammonia water can be used at room temperature.

Then, a sulfur component is removed from the slurry of the molybdenum-containing precipitate obtained by the reverse neutralization method, and the molybdenum-containing precipitate from which the sulfur component is removed is generated. In the slurry of the molybdenum-containing precipitate obtained by the reverse neutralization method, sulfate ions remaining without reacting with molybdenum or molybdenum oxide and sulfur components of hydrogen sulfate ions are present as impurities, and thus it is preferable to remove these.

A method for removing the sulfur component is arbitrary, and for example, a method by filtration using a membrane such as reverse osmosis filtration using ammonia water or pure water, ultrafiltration, or microfiltration, centrifugation, or other known methods can be adopted. When the sulfur component is removed from the slurry of the molybdenum-containing precipitate, temperature adjustment is not particularly necessary, and the removal may be performed at room temperature.

Specifically, the slurry of the molybdenum-containing precipitate obtained by the reverse neutralization method is decanted using a centrifuge, and washing is repeated until conductivity of the slurry of the molybdenum-containing precipitate becomes 500 µS/cm or less, thereby obtaining the molybdenum-containing precipitate from which the sulfur component has been removed. A liquid temperature of the slurry of the molybdenum-containing precipitate was adjusted to 25°C, a measurement section of the conductivity meter (ASCON2 manufactured by AS ONE Corporation) was immersed in the supernatant of the slurry of the precipitate, and a value of the conductivity was read after the value was stabilized.

A cleaning liquid used for removing the sulfur component is preferably ammonia water. Specifically, 5.0 mass% or less of ammonia water is preferable, 4.0 mass% or less of ammonia water is more preferable, 3.0 mass% or less of ammonia water is still more preferable, and 2.5 mass% of ammonia water is particularly preferable. When the ammonia water is 5.0 mass% or less, ammonia and ammonium ions are appropriate for the sulfur component, and an unnecessary increase in cost can be avoided.

Next, in the step of adding an organic nitrogen compound to the molybdenum-containing precipitation slurry obtained by slurrying the molybdenum-containing precipitate to generate a molybdic acid solution, the molybdenum-containing precipitation slurry is obtained by diluting the molybdenum-containing precipitate from which the sulfur component has been removed as described above with pure water or the like to form a slurry. Regarding the molybdenum concentration of the molybdenum-containing precipitation slurry from which the sulfur component has been removed, a part of the slurry is collected, dried at 110°C for 24 hours, and then fired at 1,000°C for 4 hours to generate MoOs. The weight of MoOs thus generated is measured, and the molybdenum concentration of the slurry can be calculated from the weight.

Then, by mixing an organic nitrogen compound with the molybdenum-containing precipitation slurry from which the sulfur component has been removed, the molybdic acid solution of the present invention is obtained.

Specifically, the molybdenum-containing precipitation slurry thus obtained is added to an organic nitrogen compound and the mixture is mixed with pure water so that the molybdenum concentration of the final mixture is 0.1 to 40 mass% in terms of MoOs, and the liquid temperature is maintained at room temperature (25°C) for 1 hour while the mixture is stirred, whereby a colorless and transparent molybdic acid solution of the present invention is obtained.

The organic nitrogen compound to be mixed with the molybdenum-containing precipitation slurry is preferably an aliphatic amine and/or a quaternary ammonium.

Here, from a viewpoint of solubility, the aliphatic amine is preferably mixed so that the concentration of the aliphatic amine in the molybdenum-containing precipitation slurry is 40 mass% or less. From the same viewpoint, the mixing is preferably performed so that the concentration of the aliphatic amine in the molybdenum-containing precipitation slurry is 0.1 mass% or more, and more preferably 20 mass% or more. The aliphatic amine is more preferably methylamine or dimethylamine, and particularly preferably methylamine.

On the other hand, from the viewpoint of solubility, the quaternary ammonium is preferably mixed so that the quaternary ammonium concentration in the molybdenum-containing precipitation slurry is 40 mass% or less. From the same viewpoint, the mixing is preferably performed so that the quaternary ammonium concentration in the molybdenum-containing precipitation slurry is 0.1 mass% or more, and more preferably 20 mass% or more. The quaternary ammonium is more preferably tetramethylammonium hydroxide (TMAH).

Furthermore, the organic nitrogen compound to be mixed with the molybdenum-containing precipitation slurry may be a mixture of two or more kinds instead of one kind of aliphatic amine or quaternary ammonium. Examples of the organic nitrogen compound include a mixture of two or more organic nitrogen compounds such as methylamine and tetramethylammonium hydroxide (TMAH), dimethylamine and tetramethylammonium hydroxide (TMAH), methylamine and dimethylamine, and a mixture of three or more organic nitrogen compounds such as methylamine, dimethylamine and tetramethylammonium hydroxide (TMAH), and the organic nitrogen compound may be appropriately changed according to the use.

A production method of a molybdenum oxide powder from the above-described molybdic acid solution of the present invention will be described below.

The production method of a molybdenum oxide powder of the present invention includes a step of drying and firing a molybdic acid solution obtained by the production method of a molybdic acid solution of the present invention described above to generate a molybdenum oxide powder.

First, the molybdic acid solution obtained by the above-described production method of a molybdic acid solution of the present invention is placed in a stationary furnace, and dried in the atmosphere at a heating temperature of about 110°C for 7 hours to evaporate moisture in the molybdic acid solution of the present invention, thereby obtaining an intermediate product of a molybdenum oxide powder containing molybdenum oxide particles contained in the molybdic acid solution of the present invention. The molybdic acid solution may be placed in a vacuum drying furnace having an internal pressure of the furnace is set to 0.01 MPa, heated to 60°C or higher, and vacuum-dried for 6 hours.

Next, the obtained intermediate product (also referred to as dry powder) of the molybdenum oxide powder containing molybdenum oxide particles is placed in a stationary furnace, heated to 650°C or higher, and fired for 1 to 3 hours, thereby obtaining a molybdenum oxide powder. The heating temperature is preferably 500°C or higher and 2,000°C or lower. When the heating temperature is 500°C or higher and 2,000°C or lower, the temperature is sufficient for growth of molybdenum oxide particles, firing cost can be suppressed, and a fired product obtained by firing does not become a hard lump, so that an increase in labor and cost for pulverization can be avoided. Furthermore, the heating temperature is more preferably 700°C or higher and 1,500°C or lower, still more preferably 900°C or higher and 1,500°C or lower. Firing time is preferably 0.5 hours to 72 hours. When firing time is 0.5 hours to 72 hours, the time is sufficient for the growth of the molybdenum oxide particles, and unnecessary costs can be suppressed. Furthermore, the firing time is more preferably 0.5 hours to 50 hours, and still more preferably 0.5 hours to 30 hours.

Further, a product obtained by pulverizing the fired product may be used as a molybdenum oxide powder. In addition, regardless of whether or not the fired product is pulverized, the undersize product (a fine particle side) obtained by classifying the fired product with a sieve or the like may be used as the molybdenum oxide powder. The product on the sieve (a coarse particle side) may be pulverized again, classified, and used. It is also possible to use a vibrating sieve into which iron balls coated with nylon or fluororesin, or the like is put as a grinding medium to perform both grinding and classification. By performing both classification and pulverization as described above, even if the molybdenum oxide particles that are too large are present after roasting, they can be removed. Specifically, when the classification is performed using a sieve, it is preferable to use a sieve having a mesh size of 150 µm to 1,000 µm. When the mesh size is 150 µm to 1,000 µm, a ratio of the product on the sieve does not become too large, the re-pulverization is not repeated, and the molybdenum oxide powder that needs to be re-pulverized is not classified under the sieve.

In addition, the composite molybdic acid composition of the present invention contains the above-described molybdic acid solution of the present invention and at least one element selected from a group consisting of Si, Al, Ti, Zn, Sn, Y, Ce, Ba, Sr, P, S, La, Gd, Nd, Eu, Dy, Yb, Nb, Li, Na, K, Mg, Ca, Zr, W, and Ta.

It is presumed that the composite molybdic acid composition of the present invention is present in a solution as an ion in a state where the molybdic acid and at least one element selected from the group are ionically bonded. Here, the composite molybdic acid composition of the present invention is not limited to the "solution" in the present invention, and includes those in which a precipitate is generated in the "solution". The molybdic acid concentration in the composite molybdic acid composition of the present invention can be calculated by appropriately diluting the composition with dilute hydrochloric acid as necessary, and measuring the Mo weight fraction in terms of MoOs by ICP emission spectrometry (AG-5110 manufactured by Agilent Technologies). Similarly to the Mo weight fraction, the concentration of at least one element selected from the group in the composite molybdic acid composition of the present invention can also be calculated.

The production method of a composite molybdic acid composition of the present invention includes a step of mixing the molybdic acid solution generated by the production method of a molybdic acid solution of the present invention described above with at least one element selected from a group consisting of Si, Al, Ti, Zn, Sn, Y, Ce, Ba, Sr, P, S, La, Gd, Nd, Eu, Dy, Yb, Nb, Li, Na, K, Mg, Ca, Zr, W, and Ta to generate a composite molybdic acid composition.

While stirring a mixture of the molybdic acid solution of the present invention described above and at least one element selected from the group, the liquid temperature is maintained at an appropriate temperature for a predetermined time, whereby the composite molybdic acid composition of the present invention is obtained. Here, the at least one element selected from the group to be mixed with the molybdic acid solution generated by the above-described production method of a molybdic acid solution of the present invention may have various forms such as polyoxometalate, an oxide composed of a peroxo complex, a hydroxide, a metal complex, and a salt.

The molybdic acid film of the present invention contains molybdic acid particles contained in the molybdic acid solution.

The molybdic acid film of the present invention, that is, a molybdic acid formation film contains molybdic acid particles contained in the molybdic acid solution described above.

The production method of a molybdic acid film of the present invention includes a step of applying and firing the molybdic acid solution obtained by the production method of a molybdic acid solution of the present invention described above to generate a molybdic acid film.

Specifically, the molybdic acid solution obtained by the production method of a molybdic acid solution of the present invention described above was dropped onto a substrate using a syringe while being filtered with, for example, a filter having a pore diameter of 2 µm, as necessary, and applied by spin coating (1,500 rpm, 30 seconds). Then, the substrate coated with the molybdic acid solution of the present invention is placed in a stationary furnace, heated to 700°C or higher, and fired for 1 hour, whereby the molybdic acid film of the present invention is obtained.

In addition, the composite molybdic acid film of the present invention contains composite molybdic acid particles included in the composite molybdic acid composition.

The composite molybdic acid film of the present invention, that is, the composite molybdic acid formation film contains the composite molybdic acid particles contained in the above-described composite molybdic acid solution.

The method for producing a composite molybdic acid film of the present invention includes a step of applying and firing a composite molybdic acid composition obtained by the method for producing a composite molybdic acid composition of the present invention described above to generate a composite molybdic acid film.

Specifically, the composite molybdic acid composition obtained by the above-described method for producing a composite molybdic acid composition of the present invention was dropped onto a substrate using a syringe while being filtered with, for example, a filter having a pore diameter of 2 µm, and applied by spin coating (1,500 rpm, 30 seconds) as necessary. Then, the substrate coated with the composite molybdic acid composition of the present invention is placed in a stationary furnace, heated to 700°C or higher, and fired for 1 hour, whereby the composite molybdic acid film of the present invention is obtained.

Incidentally, a dispersant, a pH adjusting agent, a colorant, a thickener, a wetting agent, a binder resin, and the like may be appropriately added to the molybdic acid solution of the present invention according to the use.

### Advantageous Effects of Invention

The molybdic acid solution of the present invention has a high concentration and excellent solution stability.

### Best Mode for Carrying out the Invention

Hereinafter, the molybdic acid solution according to the embodiment of the present invention will be further described with reference to the following examples. However, the following examples do not limit the present invention.

### (Example 1)

100 g of molybdenum trioxide was dissolved in 200 g of a 55 mass% sulfuric acid aqueous solution, and ion-exchanged water was added to obtain a molybdenum sulfate aqueous solution containing 100 g/L of molybdenum in terms of MoOs. 200 mL of this molybdenum sulfate aqueous solution was added to 1 L of ammonia water (NH₃ concentration: 25 mass%) in a time shorter than 1 minute (NH₃/MoO₃ molar ratio = 105.66, NH₃/SO₄²⁻ molar ratio = 65.56) to obtain a reaction liquid (pH 11). This reaction liquid was a slurry of molybdic acid compound hydrate, in other words, a slurry of molybdenum-containing precipitate.

Next, this reaction liquid was decanted using a centrifuge, and washed until the conductivity reaches 500 µS/cm or less to obtain a molybdenum-containing precipitate from which the sulfur component had been removed. At this time, ammonia water was used as the cleaning liquid.

Furthermore, the molybdenum-containing precipitate from which the sulfur component had been removed was diluted with pure water to obtain a molybdenum-containing precipitation slurry from which the sulfur component had been removed. MoOs was generated by drying a part of the molybdenum-containing precipitation slurry from which the sulfur component had been removed at 110°C for 24 hours and then firing it at 1,000°C for 4 hours, and the concentration of MoOs contained in the molybdenum-containing precipitation slurry from which the sulfur component had been removed was calculated from the weight of MoOs.

Then, 2 mass% methylamine and pure water were mixed with the molybdenum-containing precipitation slurry from which the sulfur component had been removed and which was diluted with pure water such that the molybdenum concentration of the final mixture was 10 mass% in terms of MoO3, and the mixture was held for 1 hour while maintaining the liquid temperature at room temperature (25°C) during stirring, thereby obtaining a colorless and transparent molybdic acid aqueous solution according to Example 1. The pH of the obtained molybdic acid aqueous solution according to Example 1 was of 9.7.

### (Example 2)

In Example 2, a colorless and transparent molybdic acid aqueous solution according to Example 2 was obtained by performing the same production method as in Example 1 except that 2 mass% methylamine and pure water were mixed such that the molybdenum concentration of the final mixture was 0.1 mass% in terms of MoOs. The pH of the obtained molybdic acid aqueous solution according to Example 2 was 9.4.

### (Example 3)

In Example 3, a colorless and transparent molybdic acid aqueous solution according to Example 3 was obtained by performing the same production method as in Example 1 except that 2 mass% methylamine and pure water were mixed such that the molybdenum concentration of the final mixture was 30 mass% in terms of MoOs. The pH of the obtained molybdic acid aqueous solution according to Example 3 was 9.5.

### (Example 4)

In Example 4, a colorless and transparent molybdic acid aqueous solution according to Example 4 was obtained by performing the same production method as in Example 1 except that 2 mass% methylamine and pure water were mixed such that the molybdenum concentration of the final mixture was 40 mass% in terms of MoOs. The pH of the obtained molybdic acid aqueous solution according to Example 4 was 9.0.

### (Example 5)

In Example 5, a colorless and transparent molybdic acid aqueous solution according to Example 5 was obtained by performing the same production method as in Example 1 except that 2 mass% dimethylamine was mixed, instead of 2 mass% methylamine, with the molybdenum-containing precipitation slurry from which the sulfur component had been removed and which is diluted with pure water. The pH of the obtained molybdic acid aqueous solution according to Example 5 was 6.7.

### (Example 6)

In Example 6, a colorless and transparent molybdic acid aqueous solution according to Example 6 was obtained by performing the same production method as in Example 1 except that 2 mass% tetramethylammonium hydroxide (TMAH) was mixed, instead of 2 mass% methylamine, with the molybdenum-containing precipitation slurry from which the sulfur component had been removed and which is diluted with pure water. The pH of the obtained molybdic acid aqueous solution according to Example 6 was 6.2.

### (Comparative Example 1)

In Comparative Example 1, the slurry of the above-described molybdenum-containing precipitate was concentrated using an ultrafiltration apparatus until the molybdenum concentration of the slurry reached 10 mass% in terms of MoOs, and washed until the conductivity reached 500 µS/cm or less, thereby obtaining a translucent sol (a suspension solution). While stirring this mixture, the liquid temperature was maintained at room temperature (25°C) for 1 hour to obtain a molybdic acid aqueous solution of the translucent sol (the suspension solution) according to Comparative Example 1. The pH of the obtained molybdic acid aqueous solution according to Comparative Example 1 was 6.9.

### (Comparative Example 2)

In Comparative Example 2, a molybdic acid aqueous solution of a translucent sol (the suspension solution) according to Comparative Example 2 was obtained by performing the same production method as in Example 1 except that 22 mass% methylamine was mixed, instead of 2 mass% methylamine, with the molybdenum-containing precipitation slurry from which the sulfur component had been removed and which is diluted with pure water. The pH of the obtained molybdic acid aqueous solution according to Comparative Example 2 was 8.8.

Then, the following physical properties were measured for the molybdic acid aqueous solutions obtained in Examples 1 to 6 and Comparative Examples 1 and 2. Hereinafter, values of the measured physical properties and the method for measuring the values of the physical properties are shown, and the measurement results are shown in Table 1.

### <Element analysis>

The sample was appropriately diluted with dilute hydrochloric acid as necessary, and the Mo weight fraction in terms of MoOs was measured by ICP emission spectrometry (AG-5110 manufactured by Agilent Technologies).

### <Dynamic light scattering method>

The particle size distribution was evaluated by the dynamic light scattering method in accordance with JIS Z 8828:2019 using a zeta potential/particle size/molecular weight measurement system (ELSZ-2000ZS manufactured by Otsuka Electronics Co., Ltd.). The filtration was performed with a filter having a pore size of 2 µm, and the dispersion treatment described above using ultrasonic waves was performed. The particle size (D50) refers to a median diameter (D50) that is a particle size indicating a 50% integrated value of an integrated distribution curve. An "initial particle size D50 (nm)" in Table 1 refers to a molybdic acid particle size (D50) in a molybdenum aqueous solution whose liquid temperature was adjusted to 25°C immediately after generation. A "temporal particle size D50 (nm)" in Table 1 refers to the molybdic acid particle size (D50) in the molybdenum aqueous solution after being left to stand for 1 month in an incubator set at a room temperature of 25°C.

### <Ammonia quantitative analysis>

25 ml of a sodium hydroxide solution (30 g/100 ml) was added to 1 to 5 ml of the sample solution, the mixed solution was boiled and distilled, and the distilled liquid (about 200 ml) was flowed out into a container containing 20 ml of pure water and 0.5 ml of sulfuric acid to separate ammonia. Next, the separated ammonia was transferred to a 250 ml measuring flask, and the volume was adjusted to 250 ml with pure water. Furthermore, 10 ml of the solution whose volume was adjusted to 250 ml was collected in a 100 ml measuring flask, 1 ml of a sodium hydroxide solution (30 g/100 mL) was added to the collected solution, and the volume was adjusted to 100 ml with pure water. The solution thus obtained was quantitatively analyzed using an ion meter (body: HORITA F-53, electrode: HORIBA 500 2A) to measure the concentration (mass%) of ammonium ions contained in the solution.

### <Measurement of pH>

The sample at 25°C was measured using a tabletop pH meter (F-71S: standard ToupH electrode, manufactured by HORIBA, Ltd.).

### <Temporal stability test>

The molybdic acid aqueous solutions of Example s1 to 6 and Comparative Examples 1 and 2 were allowed to stand for 1 month in an incubator set at a room temperature of 25°C, and then the presence or absence of a significant increase in particle size was visually observed. Those in which a significant increase in particle size was not observed, specifically, those in which an initial particle size was 200 nm or less and an increase in particle size after 1 month was 20% or less were evaluated as "o (GOOD)" which means having temporal stability, and those in which a significant increase in particle size or a precipitate was observed, specifically, those in which the initial particle size was more than 200 nm or the increase in particle size after 1 month was more than 20% were evaluated as "× (BAD)" which means not having temporal stability. In addition, the temporal particle size (D50) of the molybdic acid particles in the molybdic acid aqueous solutions of Examples 1 to 6 and Comparative Examples 1 and 2 after standing for 1 month was measured using the dynamic light scattering method described above.

### <Film formability test>

An appearance evaluation of a coating film formed on the surface of a glass substrate as a substitute for a current collecting plate was performed by observing the coating film with an optical microscope. The molybdic acid aqueous solutions of Examples 1 to 6 and Comparative Examples 1 and 2 were dropped onto a 15 mm × 15 mm glass substrate using a syringe, and applied by spin coating (1,500 rpm, 30 seconds). Then, the applied portion was air-dried with high-pressure air to form a coating film on the glass substrate. The formed coating film was observed with an optical microscope at 100 magnification, and when no bubbles, coating unevenness or cracks were observed, the film was evaluated as "o (GOOD)" which means having excellent film formability, and when even one bubble, coating unevenness or crack was observed, the film was evaluated as "× (BAD)" which means having no excellent film formability.

**[Table 1]**

| | Identification of substances | | | | | | | Evaluation | | |
|---|---|---|---|---|---|---|---|---|---|---|
| | State | MoO ₃ (mas s%) | Amin e (mas s%) | Amin e/Mo molar ratio | Organic nitrogen compound | P H | Initial partic le size D50 (nm) | Temp oral particl e size D50 (nm) | Temp oral stabilit y | Film forma bility |
| Exampl e 1 | Mixed solutio n | 10.0 | 2 | 0.93 | Methylamine | 9. 7 | < 1 nm | < 1 nm | ○ (GOO D) | ○ (GOO D) |
| Exampl e 2 | Mixed solutio n | 0.1 | 2 | 92.50 | Methylamine | 9. 4 | < 1 nm | < 1 nm | ○ (GOO D) | ○ (GOO D) |
| Exampl e 3 | Mixed solutio n | 30.0 | 2 | 0.31 | Methylamine | 9. 5 | < 1 nm | < 1 nm | ○ (GOO D) | ○ (GOO D) |
| Exampl e 4 | Mixed solutio n | 40.0 | 2 | 0.23 | Methylamine | 9. 0 | < 1 nm | < 1 nm | ○ (GOO D) | ○ (GOO D) |
| Exampl e 5 | Mixed solutio n | 10.0 | 2 | 0.64 | Dimethylami ne | 6. 7 | < 1 nm | < 1 nm | ○ (GOO D) | ○ (GOO D) |
| Exampl e 6 | Mixed solutio n | 10.0 | 2 | 0.32 | Tetramethyla mmonium hydroxide (TMAH) | 6. 2 | < 1 nm | < 1 nm | ○ (GOO D) | ○ (GOO D) |
| Compar ative Exampl e 1 | Sol | 10.0 | 0 | 0.00 | None | 6. 9 | 121 nm | 1051 nm | × (BAD) | × (BAD) |
| Compar ative Exampl e 2 | Sol | 10.0 | 22 | 10.10 | Methylamine | 8. 8 | 1294 nm | 1320 nm | × (BAD) | × (BAD) |

As shown in Table 1, the molybdic acid aqueous solutions according to Examples 1 to 6 were excellent in solution stability during long-term storage when the molybdic acid concentration in the aqueous solution was 0.1 to 40 mass%. On the other hand, in the molybdic acid aqueous solution according to Comparative Example 1, it was observed that a precipitate was precipitated after the molybdic acid aqueous solution was allowed to stand for 1 month under the test conditions of the temporal stability test described above. In the molybdic acid aqueous solution according to Comparative Example 2, a precipitate was observed.

In the molybdic acid aqueous solutions according to Examples 1 to 6, when the molybdic acid particle size (D50) measured by the dynamic light scattering method in the aqueous solution was 20 nm or less, satisfactory results were obtained as to the results of the temporal stability test. Specifically, in the molybdic acid aqueous solutions according to Examples 1 to 6, the temporal particle size (D50) of the molybdic acid hardly increased from the initial particle size (D50) even after 1 month had elapsed, and the molybdic acid aqueous solution was excellent in temporal stability. On the other hand, in the molybdic acid aqueous solution of the translucent sol (the suspension solution) according to Comparative Example 1, the initial particle size (D50) of the molybdic acid increased about 10 times in terms of the temporal particle size (D50), and a precipitate was further observed. In the molybdic acid aqueous solution according to Comparative Example 2, a precipitate was observed.

In the molybdic acid aqueous solutions according to Examples 1 to 6, when the pH of the aqueous solution was 6 or more and 12 or less, the solution stability was further improved. Since the molybdic acid aqueous solutions according to Examples 1 to 6 have increased basicity in an order of methylamine, dimethylamine, and tetramethylammonium hydroxide (TMAH) contained in the aqueous solutions, it was presumed that as the basicity increases, the methylamine, dimethylamine, and tetramethylammonium hydroxide (TMAH) tend to strongly bind to the polymolybdic acid polynuclear complex ion, so that H+ in the polymolybdic acid polynuclear complex ion is liberated, leading to a decrease in pH.

In the molybdic acid aqueous solutions according to Examples 1 to 6, as a result of observing the coating film formed from these molybdic acid aqueous solutions at 100 magnification with an optical microscope, in the molybdic acid films formed from the molybdic aqueous solutions according to all the examples, no bubbles, coating unevenness, and cracks were observed, and the film formability was excellent.

The invention disclosed in the present description includes, in addition to the configurations of the respective inventions and the embodiments, those specified by changing these partial configurations to other configurations disclosed in the present description, those specified by adding other configurations disclosed in the present description to these configurations, or those specified by deleting these partial configurations to an extent that a partial action and effect can be obtained and forming a superordinate concept.

### Industrial Applicability

The molybdic acid aqueous solution according to the present invention has a high concentration and excellent solution stability, and is suitable as a coating agent or a composite material with a plurality of elements. Since the molybdic acid aqueous solution according to the present invention can be produced with low energy and is stable as a product, it leads to achieving sustainable management and efficient utilization of natural resources.

## Claims

1. A molybdic acid solution containing 0.1 to 40 mass% of molybdenum in terms of MoOs, wherein
the molybdic acid solution has a particle size (D50) of 20 nm or less as measured by particle size distribution measurement using a dynamic light scattering method.

2. The molybdic acid solution according to claim 1, wherein the molybdic acid solution is an aqueous solution.

3. The molybdic acid solution according to claim 1 or 2, wherein the molybdic acid solution contains ammonia and an organic nitrogen compound.

4. The molybdic acid solution according to claim 3, wherein the organic nitrogen compound is an aliphatic amine and/or a quaternary ammonium.

5. The molybdic acid solution according to claim 4, wherein the aliphatic amine is methylamine or dimethylamine, and the quaternary ammonium is tetramethylammonium hydroxide (TMAH).

6. The molybdic acid solution according to claim 1 or 2, wherein in the particle size distribution measurement, the particle size (D50) is 10 nm or less.

7. The molybdic acid solution according to claim 1 or 2, wherein in the particle size distribution measurement, the particle size (D50) is 2 nm or less.

8. The molybdic acid solution according to claim 1 or 2, wherein in the particle size distribution measurement, the particle size (D50) is 1 nm or less.

9. The molybdic acid solution according to claim 1 or 2, wherein the molybdic acid solution has a pH of 6 or more and 12 or less.

10. A molybdenum oxide powder comprising molybdic acid particles contained in the molybdic acid solution according to claim 1 or 2.

11. A production method of a molybdic acid solution, comprising:
a step of adding an acidic molybdenum aqueous solution containing molybdenum in an amount of 1 to 100 g/L in terms of MoOs to a 10 to 30 mass% ammonia aqueous solution to generate a molybdenum-containing precipitate; and
a step of adding an organic nitrogen compound to a molybdenum-containing precipitate slurry obtained by making the molybdenum-containing precipitate into a slurry to generate a molybdic acid solution.

12. The production method of a molybdic acid solution according to claim 11, wherein the organic nitrogen compound is an aliphatic amine and/or a quaternary ammonium.

13. A production method of a molybdenum oxide powder, comprising a step of drying and firing the molybdic acid solution obtained by the production method according to claim 11 or 12 to generate a molybdenum oxide powder.

14. A composite molybdic acid composition comprising the molybdic acid solution according to claim 1 or 2; and at least one element selected from the group consisting of Si, Al, Ti, Zn, Sn, Y, Ce, Ba, Sr, P, S, La, Gd, Nd, Eu, Dy, Yb, Nb, Li, Na, K, Mg, Ca, Zr, W, and Ta.

15. A production method of a composite molybdic acid composition, comprising a step of mixing the molybdic acid solution generated by the production method of a molybdic acid solution according to claim 11 or 12 with at least one element selected from the group consisting of Si, Al, Ti, Zn, Sn, Y, Ce, Ba, Sr, P, S, La, Gd, Nd, Eu, Dy, Yb, Nb, Li, Na, K, Mg, Ca, Zr, W, and Ta to generate a composite composition.

16. A molybdic acid film comprising molybdic acid particles contained in the molybdic acid solution according to claim 1 or 2.

17. A production method of a molybdic acid film, comprising applying and firing the molybdic acid solution according to claim 1 or 2.

18. A composite molybdic acid film comprising composite molybdic acid particles contained in the composite molybdic acid composition according to claim 14.

19. A production method of a composite molybdic acid film, comprising applying and firing the composite molybdic acid composition according to claim 14.
